# EUROPEAN PATENT APPLICATION

(11) **EP 2 001 193 A1**
(43) Date of publication of application: **10.12.2008**
(21) Application number: 08153258.2
(22) Date of filing: 25.03.2008
(51) Int. Cl.: H04L 29/06

(54) **Method and arrangement for providing content to multimedia devices**

(30) Priority: 06.06.2007 GB 0710853; 24.04.2007 GB 0708012; 24.04.2007 US 926006 P
(71) Applicant: Cvon Innovations Ltd, 22 Ganton Street London W1F 7BY (GB)
(72) Inventor: Aaltonen, Janne, 20900, Turku (FI)
(74) Representative: McCann, Heather Alison

(57) **Abstract**

Arrangement and method for providing content to multimedia devices, in particular mobile multimedia devices, wherein a content portal provides content to the devices in a form requiring a rights object to enable use thereof, a rights object portal provides rights objects to the devices and advertisements which are associated with the rights objects are also provided. Upon receipt of the rights object with an associated advertisement, the user is exposed to the advertisement in conjunction with use of the content.

## Description

### Field of the Invention

The present invention relates generally to a method and arrangement for providing content to multimedia devices, in particular mobile multimedia devices. Content as used herein may be music files, video files, music video files, movies, albums, streaming music, steaming video, video games, applications, pictures, documents, text, figures, ring tones, wall paper, web pages, audio files, information, news, weather information, digital books, audio books, video clips and the like.

The present invention also relates generally to a method and arrangement for arranging sponsorship of delivery of content to users of multimedia devices and in particular to users of mobile multimedia devices.

### Background Information

Current mobile multimedia devices are typically capable of receiving multi-media content, such as audio and video content, via a communications network which enables the user to listen to and/or view the received content depending on its form. For example, reception and usage of music files is a highly popular feature which is available for various types of portable mobile devices including the Apple iPod® and other brands of MP3 players, Nokia's N93 smart phone, SonyEricksson's walkman phone and laptop computers. Moreover, fixed multimedia devices having a connection to a communications network are also typically capable of receiving audio and video content which enable a user to listen to and/or view such content.

In addition to enabling reception and usage of music files, many mobile multimedia devices are also capable of receiving video and television files and display the video and television content of such files on a screen thereof.

When using mobile devices, the content is typically delivered to each mobile device using communication networks. Alternatively, the content can be delivered to mobile devices via a personal computer or other device having a connection to the communications network when the mobile devices are connected or linked to the personal computer or other device, or the content can be preloaded into the mobile terminal's memory or can be delivered to the mobile terminal via physical means such as memory cards.

The users of the mobile devices often receive the content, in whatever form, for free. At times however, the users must pay for the content. Typically, when a user pays for the content, there is some kind of Digital Rights Management (DRM) arrangement which protects the rights of the copyright owner of the content. In a typical DRM arrangement, the content is protected and delivered as an encrypted package to the user's mobile device. Rights Object (RO) keys are typically delivered separately to the user's mobile device which allow usage of the content based on business rules set in the RO. Additional details about DRM arrangements and RO keys can be found in various trade specifications, such as one designated Open Mobile Alliance OMA-AD-DRM-V2_0-20050908-C, the entire disclosure of which is incorporated herein by reference.

When users are able to receive the content for free, there are usually advertisements associated with the content. For example, broadcast television and radio networks provide content to users for free and include periodic advertisements.

Another technique to include advertisements when delivering content to users is a concept referred to as mobile marketing and advertising.

At present, mobile marketing and advertising is mostly based on push campaigns to opt-in a consumer mobile number in a database, or pull campaigns that acquire mobile phone numbers from consumers. The most typical example of the pull campaign is the "text-to-win" campaign where, e.g., a soft drink bottle contains a short code to be sent via text message to a certain telephone number. In return, the consumer receives a notification if they have won with the selected marketing message, or a series of messages is broadcast to their mobile phone. Other popular methods of direct advertisement are achieved using text and video messaging.

Regardless of the manner in which an advertisement is delivered to a user of a mobile device, there is always the issue of the delivery cost. The primary components of the delivery cost are the telecommunication transport cost and the cost of the content. Often, an entity might be willing to sponsor the advertisements but the value of the sponsorship is not sufficient to fully cover both the transport cost and the cost for the content.

In view of issues relating to effective mobile marketing and advertising, such as sponsorship issues, advertisers concentrate their advertising campaigns on media which offers a sufficient number of "eye balls" with a single advertisement campaign, e.g., broadcast television.

### Summary of the Invention

The present invention is directed at least in part to a method and arrangement for coordinating sponsorship of content delivered to users, and particularly to the users' mobile multimedia devices. Specifically, content used at different times can be associated with different advertisements so that the cost for sponsoring the same content can be distributed or shared by several advertisers. This is particularly beneficial if the delivery cost of the content, i.e., the transport cost and content cost, is so high such that no single advertiser is willing to sponsor the content for all users. However, it is possible that the cost for sponsoring the same content can be borne by a single advertiser or by a number of advertisers having different advertisements and thus multiple advertising campaigns.

In one embodiment, each time the content is accessed or used by the user, a different advertisement is provided. Thus, in the case of a music file, the user would hear different advertisements from different sponsors, or possibly even the same sponsor, every time (or at some of the times) the music is listened to on the mobile multimedia device. The delivery cost for the content, both its transport and content cost, is therefore obtained or recouped over time.

### Brief Description of the Drawings

The invention, together with further advantages thereof, may best be understood by reference to the following description taken in conjunction with the accompanying drawings, wherein like reference numerals identify like elements, and wherein:
FIG. 1 is a schematic of an exemplifying architecture of an advertisement sponsorship arrangement in accordance with the invention.
FIG. 2 is a diagram of the manner in which communications flow using the advertisement sponsorship arrangement shown in FIG. 1.
FIG. 3 is a flow chart of the sponsorship arrangement in accordance with the invention from the perspective of a user.
FIGS. 4 and 5 are flow charts of the manner in which advertisements are selected for association with a rights object in accordance with the invention.
FIG. 6 is a schematic diagram of an exemplifying mobile terminal for use in the invention.
FIGS. 7A, 7B and 7C are flow charts showing techniques for super distribution of content, rights objects and/or associated advertisements in accordance with the invention.

### Detailed Description

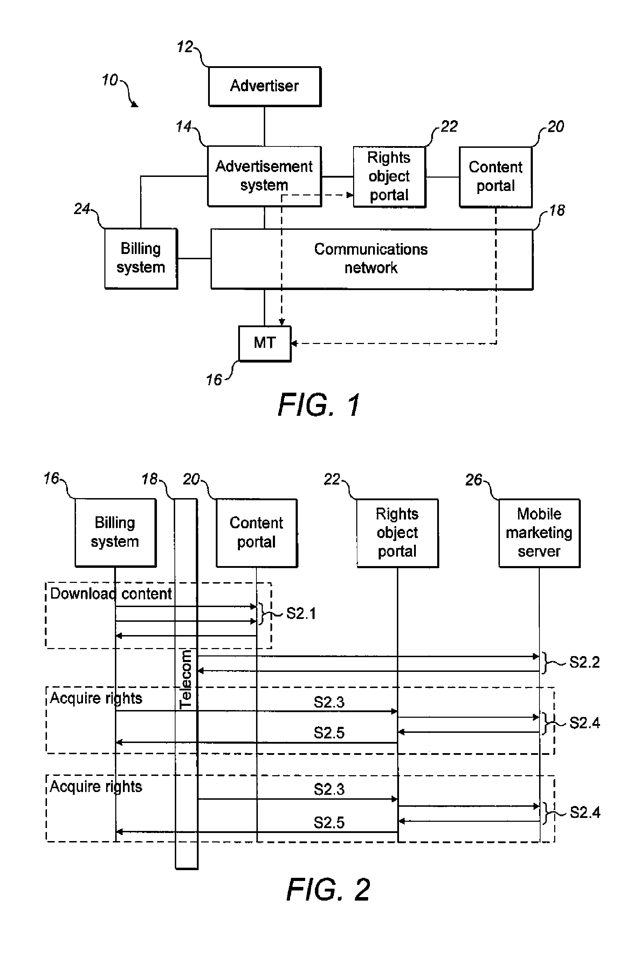

Referring to the accompanying drawings wherein the same reference numerals refer to the same or similar elements, FIG. 1 is a schematic of an advertising sponsorship arrangement in accordance with some embodiments of the invention, designated generally as 10. In the arrangement 10, an advertiser 12 provides advertisements to an advertisement system 14 relating to its products and/or services to be directed to users of a mobile terminal (MT) 16. The advertisement system 14 is arranged to manage advertisement campaigns, and maintain databases containing user profiles such as sex, age, preferences, history information, demographics etc. These databases can be stored in a computer memory associated with or integral with the advertisement system 14 and accessed via computer programs.

Advertisement system 14 is capable of directing the advertisement campaigns to one or more MTs 16 using one or more communications networks 18. The communications network 18 used in embodiments of the invention may be any network which enables delivery of data. Examples of possible communications networks include, but are not limited to, a second Generation (2G) network utilizing Global System for Mobile Communications (GSM), a 2.5 Generation network, a third Generation (3G) network utilizing GSM, Wideband Code Division Multiplex Access (WCDMA), Code Division Multiplex Access (CDMA), or Time Division Multiplex Access (TDMA), a network using Wireless Local Area Networks (WLAN), a broadcast network such as Digital Video Broadcasting for Handheld (DVB-H), a broadcast-over-cellular network, fixed or wireless Internet connections, WiMax or other access technologies. Communications network 18 may be a combination of several types of the above networks, for example, one including WLAN and GPRS connectivity.

Communications network 18 is used to deliver content from a content issue server or portal or content portal 20 to at least one MT 16. The content is associated with a rights object (RO) which is delivered to each MT 16 via a rights object issuer server or rights object portal 22. The RO may be delivered together with or in the context of advertisements delivered from the advertisement system 14.

Optionally, arrangement 10 includes a billing system 24 coupled to the advertisement system 14 and/or the communications network 18 and may be arranged to meter usage of the communications network 18 by each MT 16 and meter usage and payments of or for the content being delivered to each MT 16. The billing system 24 or other suitable means associated with the advertising arrangement 10 can thus arrange for payment from users of the MTs 16 based on their usage of the communications network 18 and their delivered content. The billing system 24 can be also used to arrange billing of the advertisers for content, advertisement and/or DRM object delivery and content costs.

The invention preferably uses a DRM arrangement in which the content may, as is customary, be packaged before delivery to protect it from unauthorized access. The content portal 20 delivers the DRM content, and the rights object portal 22 generates an RO. An RO governs how the DRM content may be used and is often an XML document specifying permissions and constraints associated with a piece of DRM content. DRM content cannot be used without an associated RO, and may only be used according to the permissions and constraints specified in the RO.

The content portal 20 and rights object portal 22 may embody different roles in the arrangement and method in accordance with the invention. Depending on the implementation, they may be provided by the same or different entities, and implemented by the same or different network nodes. For example, in one implementation, content owners may pre-package DRM content, which is then distributed by a content distributor acting as both the content issuer and the rights object issuer.

Open Mobile Alliance DRM enables a separation of DRM content from an RO. DRM content and Rights Objects may be requested separately or together, and they may be delivered separately or at the same time. For example, a user can select a piece of content, pay for it, and receive DRM content and an RO in the same transaction. Later, if the RO expires, the user can go back and acquire a new RO, without having to download the DRM content again.

FIG. 2 shows one possible flow of communications using arrangement 10. Initially, a user or owner of the mobile terminal MT 16 accesses the content portal 20, finds content they want to receive and initializes a download of that content from the content portal 20. This download is achieved via a communications infrastructure such as a communications network 18 using cellular connectivity. A mobile marketing server 26, operated or managed by or on behalf of the advertiser or group of advertisers 12, is informed about the requested download via the communications network 18 when the download is determined to be sponsored. Mobile marketing server 26 may constitute part of the advertising system 14 shown in FIG. 1

Determination of whether the content sought to be downloaded is sponsored may be made by a computer program resident at the content portal 20 or elsewhere, such as at the user's MT 16. Such a computer program may be designed to interface with the user of the MT 16 and the content portal 20, and generate a variable output depending on its determination of whether the requested content is sponsored. If the content is not sponsored, the computer program can be designed to provide the requested content, e.g., free to the user or based on satisfaction of certain conditions such as payment from the user. If the content is determined to be sponsored, then the mobile marketing server 26, or other computer operated or managed by the advertiser 12 or an entity which manages advertisements for advertisers, is notified of the need to sponsor the requested content and the possibility of inclusion of an advertisement with an RO which governs use of that content.

As shown in FIG. 2, the content is regulated by a DRM so that even though at stage S2.1 the user has received the requested download of content from the content portal 20 at their MT 16, they are unable to use it without a RO. Thus, at stage S2.2 the rights object portal 22 must also be contacted via the communications network 18 when the user initiates a download of the selected content. In the exemplifying embodiment shown in FIG. 2, a new RO is needed from the rights object portal 22 every time the content is used by the user, as shown at stage S2.3. Each time the user acquires rights from the rights object portal 22, the rights object portal 22 communicates with the mobile marketing server 26 as shown at stage S2.4, or another entity or server which regulates delivery of RO's for the content downloaded by the user, to verify if it is permissible to deliver the RO. Alternatively, the mobile marketing server 26 can provide permission to the rights objects portal 22 to deliver several, i.e., a predetermined or agreed amount, RO's instead of asking for permission every time. When it is determined by a computer program in the rights object portal 22 and/or mobile marketing server 26 that it is permissible, delivery of the RO from the rights object portal 22 to the user's MT 16 as shown at stage S2.5 can follow an advertisement obtained from the mobile marketing server 26 or alternatively, the RO can actually be included in the advertisement. Other ways to associate an advertisement with an RO are also envisioned. This procedure to associate an advertisement, obtained from the mobile marketing server 26, with an RO provided by the rights object portal 20, is repeated every time the same content, which has previously been downloaded by the user, is used.

In an alternative embodiment, the mobile marketing server 26 acquires one or more RO's from the rights object portal 22 for the downloaded content and delivers an RO with an associated advertisement to the user when needed, i.e., every time the user wants to use the downloaded content. Thus, RO's are stored on the mobile marketing server 26 and provided therefrom to the user's MT 16.

In an alternative embodiment, the RO can be configured so that it gives the user several usage times for the same content or can be configured in such a way that the RO is valid for a specific time period. After this time period or given number or content usages, the user will need a new RO which is then acquired from the rights objects portal 22 via the mobile marketing server 26.

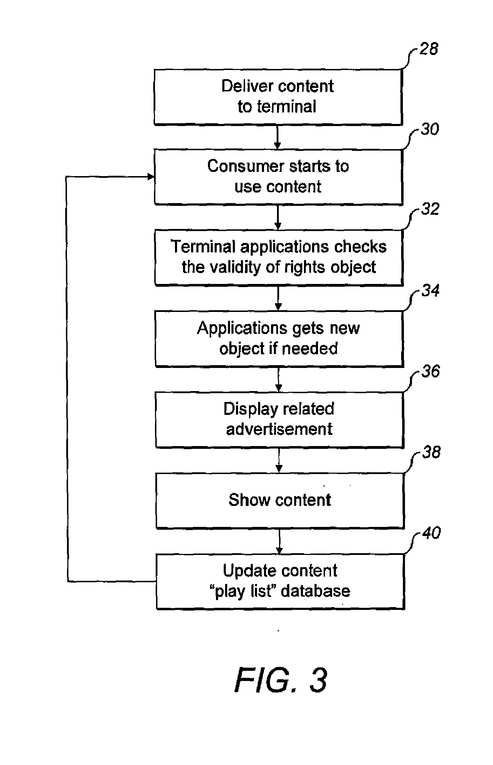

FIG. 3 is a flow chart showing the manner in which a user accesses or uses content in an arrangement and method in accordance with some embodiments of the invention. At step 28, content is delivered to the user's mobile terminal, e.g., downloaded in any of the ways described herein. Whenever the user wants to access or use the delivered content in their mobile terminal, at step 30, the process of acquiring rights is started. A computer program, which may be resident in the mobile terminal, checks if an RO for the content is available and/or valid or whether a new RO is needed, at step 32. If a new RO is needed, the computer program is arranged to initiate a procedure to acquire the RO, at step 34, to enable the user to use the content.

As noted above, an advertisement is associated with the RO, i.e., either included in the advertisement or preceding the RO in the transmission to the user's mobile terminal. At step 36, this associated advertisement is displayed to the user, for example on a screen of their mobile terminal, or otherwise provided to the user, e.g., if the advertisement is a sound-based advertisement then it would be vocalized through a speaker or headphones on the user's mobile terminal. After the advertisement is displayed, the content is displayed or otherwise made available for use by the user at step 38.

At step 40, a database is updated to note which advertisement was associated with the content. This database may be resident in the user's mobile terminal or elsewhere, such as at the rights object portal, the advertising system or the mobile marketing server.

In one embodiment, there may be several RO's stored in the user's mobile terminal and several advertisements in the mobile terminal which have been downloaded prior to the user's request to use downloaded content. In one embodiment, the RO's and advertisements can be downloaded in the background when downloading and/or viewing the content. As such, when the user seeks to use content, an RO and associated advertisement are readily available to the user without requiring use of the communications network to obtain an RO. This avoids the need for the user to receive an RO from the rights object portal and an advertisement from the mobile marketing server each and every time that they want to use downloaded content. As such, it avoids problems with transmission delays when accessing the rights object portal and the mobile marketing server.

In an exemplifying embodiment of the invention, an RO can be created by the rights object portal and delivered to the user's mobile terminal which allows usage of the content for several times with the same RO. The advertisement associated with such an RO can be the same or can be varied every time the content is used. This eliminates transmission delays when accessing the rights object portal to obtain a new RO.

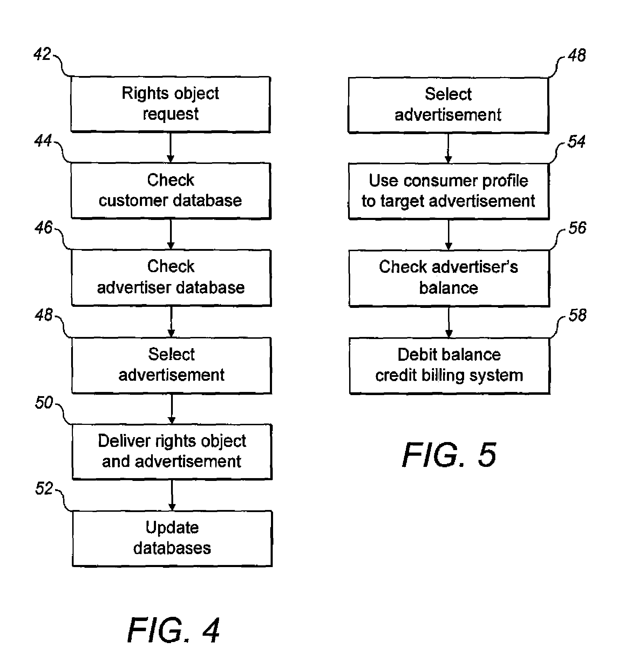

FIGS. 4 and 5 are flow charts showing processes for selecting advertisements to be associated with RO's in accordance with some embodiments of the invention. These processes may be implemented by a computer program resident in the advertisement system 14 shown in FIG. 1 or the mobile marketing server 26 shown in FIG. 2. Generally, an advertisement is selected based on rules in the advertisement system, i.e., parameters set by the advertiser and an advertisement service provider. The computer program can be arranged to provide the advertiser with selectable parameters, such as characteristics of users profiles, and upon selection, the program would cause this advertiser's advertisements to be associated with RO's being delivered only to users have the selected parameter(s).

As shown in FIG. 4, the computer program may be arranged to receive an RO request from the rights object issuer server at step 42, check a customer database to obtain a profile or characteristics of the user making the request for an RO at step 44, check a database of advertisers for an available advertiser, e.g., one willing to sponsor delivery of the requested content, select an advertisement from a database provided by or on behalf of the advertiser at step 48 and then deliver the RO and the selected, associated advertisement to the user at step 50. Thereafter, one or more of the database can be updated to reflect the delivery of an RO with the particular advertisement to the user at step 52. Updating the database(s) can be designed to ensure that the user receives different advertisements when the use the same content, whether from the same or different advertisers.

As shown in FIG. 5, when selecting an advertisement at step 48, an arrangement and method in accordance with some embodiments of the invention can be designed to enable advertisers to target their advertisements to users having specific profiles or characteristics, provided profile or characteristic information about users of the devices is available. To this end, the computer program may be arranged to check a database of advertisers to identify an advertiser who wants to target an advertisement to users having characteristics or a user profile of the user currently requesting an RO, at step 54. At step 56, the program then checks the advertiser's balance (the advertiser having an advertising account including a cash balance with the advertisement system) to ascertain whether there are sufficient funds to cover a charge for associating the advertisement with an RO, which charge may be set by the entity operating or managing the advertisement delivery or sponsorship arrangement. If so, at step 58, a billing system associated with the arrangement debits the advertiser's balance for the charge for delivery of the RO to the user.

Each advertiser's balance may be set as desired and managed by the advertiser's desire to pay for delivery of advertisements to the users. It is foreseen that the advertisers can also be provided with means to manage the advertisements in the databases thereof.

With respect to the charge imposed by the entity operating or managing the advertisement delivery or sponsorship arrangement in accordance with the invention, in an exemplifying embodiment, each charge may only be a portion of the total delivery costs so that the entire delivery cost is spread out or distributed over multiple advertisements (either by different advertisers or the same advertiser). Specifically, the entire delivery cost can be apportioned to a plurality of advertisements which are provided with a respective plurality of RO's which enable the user to use the same downloaded content. In this manner, if the advertisements are provided by different advertisers, no single advertiser is responsible for the entire delivery cost of the content but rather each is responsible for and covers only a portion of the delivery cost. Alternatively, the charge is not required to be directly related to the number of advertisers or the delivery cost and thus, the charges paid by a cumulative amount of sponsors can be larger than the delivery cost.

The portion of the delivery cost each advertiser pays may depend on, for example, the number of advertisements being associated with the RO's, the time of day, and/or the order in which the advertisements are provided. In the latter case and at times identified as peak downloading times, it is conceivable that the advertisement sent with the first RO and at peak downloading times is apportioned a larger percentage of the total delivery cost than an advertisement sent with a subsequent RO to enable the user to view the same content.

As an example of the manner for apportioning the delivery cost, assuming the entire delivery cost is 2€ and that an advertiser is only willing to pay 0.3€ per exposure of the advertisement to a user, or even more specifically, to a target user. In this regard, an advertiser may be provided with an opportunity to pay one fee per exposure of the advertisement to any user and another, likely higher fee per exposure to a targeted user and/or at within a specified delivery window.

As described above, there is a database of advertisements for association with RO's being provided to users to enable the users to use downloaded content. As the content is delivered to the user's mobile terminal for the first time, a first advertisement is selected from the database and associated with the first RO being directed to the user. Upon receipt of the RO, the user is able to initially use the downloaded content. This generates 0.3€ of revenues. The billing system connected to the advertisement system is arranged to document the delivery of the advertisement to the user and arrange for payment of the 0.3€ from the advertiser who has thus sponsored a portion of the delivery cost of the content.

Every time the user subsequently wants to access or use the same content, the user's mobile terminal is programmed to request a new RO from the rights object portal if the RO is not valid, which has an associated advertisement. The advertiser(s) of each advertisement associated with each new RO is noted by the billing system and payment of 0.3€ for each advertisement is arranged.

In this manner, since each advertisement associated with a respective RO enables use of specific downloaded content requires payment of 0.3€ from the advertiser, the entire delivery cost of 2€ for the content is covered after the user uses the same content for the 7th time (7x0.3€ = 2.1€ > 2.0€). Of course, since the delivery cost and the charge for associating an advertisement with an RO may vary, it may require that the user use the downloaded content more or less than seven times to cover the entire delivery cost of the content.

After the entire delivery cost for the content is covered or recouped, the content can be made advertisement-free (i.e., new RO's are provided without any associated advertisements or an RO is provided which allows for unrestricted use of the content) or the arrangement can continue associating advertisements with new RO's every time the content is sought to be used by the user. In the latter case, a residual stream of advertising revenue is obtained. In the event that the RO is downloaded fewer times than is required for the delivery cost of accessing the content to be offset by advertising costs, the delivery cost for the content can be borne by the content portal 20 or the user, or a combination of both.

The advertisement delivery and sponsorship arrangement can be arranged to vary the price of each advertisement being associated with an RO based on the viewing or usage time of the content. For example, the price can be higher for the first time the user uses the content since it is likely that the content, once downloaded, will be used at least once. The price can also be higher for content which is used several times since this is indicative that the user likes the content and pays attention to it.

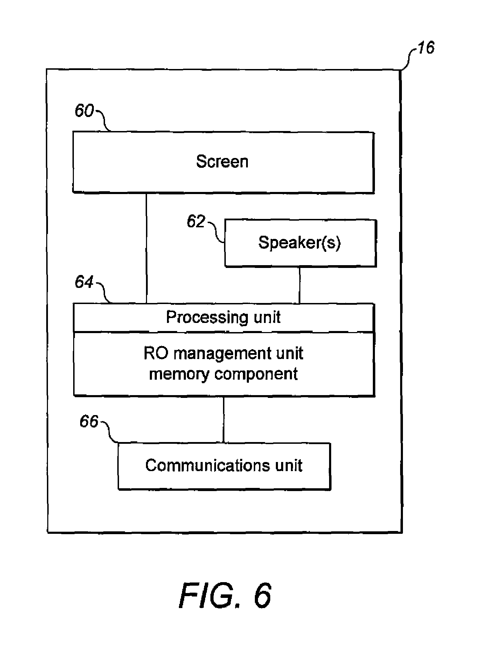

Referring now to FIG. 6, the mobile terminal 16 in accordance with the invention can be any type of known device which interacts with its user, whether by displaying picture or video files via a screen 60 with possible audio output via one or more speakers 62 or by playing audio files via one or more speakers 62. Mobile terminal 16, to be capable of the above-described uses in the invention, would include a processing unit 64 coupled to the screen 60 and speaker(s) 62, and a communications unit 66 arranged to receive content in a form requiring a rights object (RO) to enable use thereof and receive an RO having an associated advertisement. Instead of the screen 60 and speaker(s) 62, another form of a content-play unit arranged to provide the content to a user of the device in an audio form and/or video form can be provided.

The processing unit 64 of the mobile terminal 16 may also include electronic circuitry, e.g., hardware and/or software, which serves as an RO management unit arranged to check the presence and validity of an RO in the mobile terminal 16 and direct the communications unit 66 to request a new RO if there are no valid RO's in the mobile terminal 16. A memory component can also be included in or connected to the processing unit 64 of the mobile terminal 16 and connected to the RO management unit and store RO's and content. When the communications unit 66 is arranged to access a content portal to enable content to be requested, the RO management unit of the processing unit 64 can be arranged to determine whether requested content requires an RO and if so, direct the communications unit 66 to request a new RO or a plurality of RO's. Instead of a communications unit, content-play unit and RO management unit, other electronic components can be used, whether implemented as hardware alone, software alone or a combination of both hardware and software.

The foregoing enables innovate mobile marketing and advertising. This is important because such a concept is considered by advertisers as the next new channel to directly reach consumers since it utilizes core assets and characteristics of the mobile media, namely, it is personal in that it is directed solely to individual consumers, it is "always on" and can reach the consumers whenever they access their communications devices, it is mobile and naturally forms groups of people who communicate actively with each other. These characteristics combined with social networks-based approaches of the Internet could form a very powerful base to execute marketing strategies.

In general, mobile marketing and advertising can be divided into the following four categories: mobile marketing, mobile advertising, mobile direct marketing and mobile customer relation management (CRM). The present invention in any of its forms discussed above is applicable to all categories.

Mobile marketing is commonly considered as the systematic planning, implementing and control of a mix of business activities intended to bring together buyers and sellers for the mutually advantageous exchange or transfer of products or services where the primary point of contact with the consumer is via their mobile device.

Mobile advertising is commonly considered as the paid, public, non-personal announcement of a persuasive message by an identified sponsor as well as the non-personal presentation or promotion by a firm of its products to its existing and potential customers where such communication is delivered to a mobile phone or other mobile device. Examples of mobile advertising include: Wireless Application Protocol (WAP) Banner ads, mobile search advertising, mobile video bumpers, and interstitial ads in or on device portals.

Mobile direct marketing is commonly considered a sales and promotion technique in which promotional materials are delivered individually to potential customers via the potential customer's mobile phone or other mobile device. Examples of mobile direct marketing include the sending of Short Message Service (SMS), Multimedia Message Service (MMS) or Wireless Application Protocol (WAP) push messages, Bluetooth messaging and other marketing to mobile phones or other mobile devices.

Mobile customer relation management is commonly considered as a combination of all the foregoing in a manner that establishes a long-term, engaging relationship between the customer and the marketing or promoting company.

In the context of this document, computer-readable medium could be any means that can contain, store, communicate, propagate or transmit a program for use by or in connection with the method, system, apparatus or device. The computer-readable medium can be, but is not limited to (not an exhaustive list), electronic, magnetic, optical, electromagnetic, infrared, or semi-conductor propagation medium. The medium can also be (not an exhaustive list) an electrical connection having one or more wires, a portable computer diskette, a random access memory (RAM), a read-only memory (ROM), an erasable, programmable, read-only memory (EPROM or Flash memory), an optical fiber, and a portable compact disk read-only memory (CDROM). The medium can also be paper or other suitable medium upon which a program is printed, as the program can be electronically captured, via for example, optical scanning of the paper or other medium, then compiled, interpreted, or otherwise processed in a suitable manner, if necessary, and then stored in a computer memory. Also, a computer program or data may be transferred to another computer-readable medium by any suitable process such as by scanning the computer-readable medium.

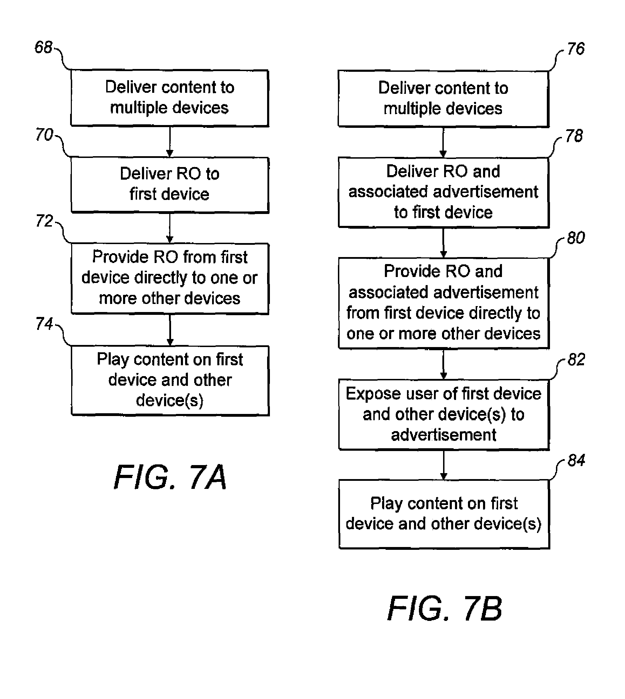

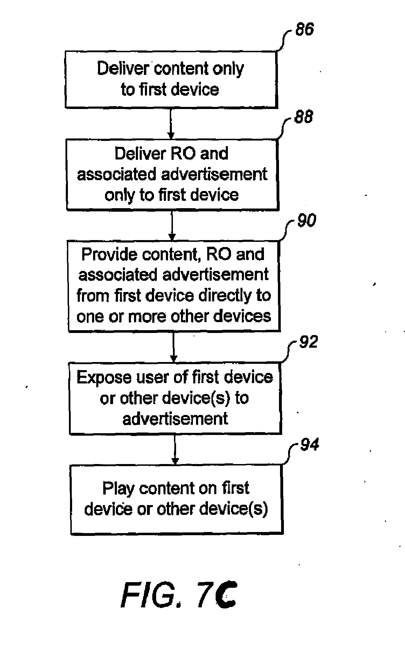

Referring now to FIGS. 7A, 7B and 7C, the invention can also utilize a DRM arrangement wherein users can distribute the content directly to other users without using any specific communication network. This is referred to as super distribution. Thus, in one embodiment of the invention, content, RO's and related advertisements can be obtained by one mobile terminal and thereafter distributed from that mobile terminal to another mobile terminal enabling a super distribution type of arrangement.

As shown in FIG. 7A, one embodiment of such a method includes delivering the same content to the devices in a form requiring a RO to enable use thereof 68, delivering the RO to a first device 70, using for example any of the techniques described above, and enabling the first device to communicate with one or more other devices without use of a communications network to provide each of those devices with the RO for the content 72. The first device and the other devices that received the content and RO can thus play the content 74.

With reference to FIG. 7B, applying an advertising sponsorship technique described above, the content is delivered to the devices 76 and an advertisement is associated with each RO and the RO with associated advertisement is delivered to the first device 78. The first device directly communicates with the other devices and provides the RO and associated advertisement 80. As such, when the user of any device uses the content, the user is exposed to the advertisement 82 that came with the RO for that content and thereafter can play the content 84.

For this type of arrangement, the content is not required to be delivered to each of the users in the manner described above, e.g., directly from a content portal. Rather, as shown in FIG. 7C, it is possible that only the user of the first device receives the content 86 and an RO and associated advertisement 88. The first device directly communicates with the other devices and provides the content, RO and associated advertisement 90. As such, when the user of any device uses the content, the user is exposed to the advertisement 92 that came with the RO for that content and thereafter can play the content 94.

The method provides an efficient way to distribute advertisements without use of a communications network but rather relying on direct communications between user's devices.

Having described exemplary embodiments of the invention with reference to the accompanying drawings, it will be appreciated that the present invention is not limited to those embodiments, and that various changes and modifications can be effected therein by one of ordinary skill in the art without departing from the scope or spirit of the invention as defined by the appended claims. For example, while the present application is discussed above in connection with mobile multimedia devices, it is not intended to be limited to such devices and is equally applicable to any multimedia device capable of communicating over the internet, a telephone network, or any communications network. For example, in addition to downloading the content from one or more dedicated content portals, the content can be delivered from several servers and peer-to-peer type networks. In addition, in connection with the super distribution type of arrangement, while it is described that the same content is provided to the first device and the one or more devices, it is foreseen that different content can be provided to the first device and the one or more devices. In this situation, the RO is of a more general type (e.g. for all songs of a particular music group as opposed to a specific song by that music group) which would enable different users to access different content (different songs by the same musical group) with the same RO. Further, it is also foreseen that each of the content and advertisement provided to the one or more other devices may be delivered from the first device or from the content portal, or other source. It is also foreseen that the advertisement may be delivered to the device with the content, with the RO, or separately from the delivery of the content and RO, but the advertisement is preferably associated with at least one of the content and the RO being delivered to the device.

## Claims

1. A method for distributing rights objects to multimedia devices, comprising:
delivering content to a first one of the devices in a form requiring a rights object (RO) to enable use thereof;
delivering the RO to the first device;
providing content to at least one other device; and
enabling the first device to communicate with the at least one other device to provide the at least one other device with the RO for the content provided thereto.

2. The method of claim 1, further comprising:
associating a message with the RO; and
delivering the RO with the associated message to the first device, the first device communicating with the at least one other device to provide the at least one other device with the RO for the content and associated message;
whereby the user of each device is exposed to the message when accessing the content.

3. The method of claim 1 or claim 2, wherein the step of providing the content to the at least one other device comprises delivering the content from the first device to the at least one other device.

4. The method of any one of claim 1 to claim 3, wherein the step of providing content to the at least one other device comprises delivery of the content to the at least one other device from a source other than the first device.

5. The method of any one of the preceding claims, wherein the step of providing content to the at least one other device comprises delivering the content with an associated message to the at least one other device.

6. The method of any one of the preceding claims, wherein the step of providing the RO to the at least one other device comprises delivering the RO with an associated message to the at least one other device.

7. The method of any one of the preceding claims, further comprising the step of delivering a message to the at least one other device which is associated with at least one of the content and the RO.

8. The method of claim 7, wherein the step of delivering a message to the at least one other device comprises delivering the message with the content, with the RO, or separately from delivery of the content and RO.

9. The method of any one of the preceding claims, wherein the step of enabling the first device to communicate with the at least one other device occurs without use of a communications network.

10. The method of any one of the preceding claims, wherein upon receipt of the RO by the first one of the devices, the user of the first one of the devices is able to use the content delivered thereto, and wherein upon receipt of the RO by the at least one other device, the user of the at least one other device is able to use the content provided thereto.

11. The method of any one of the preceding claims, wherein the content provided to the at least one other device is the same content delivered to the first one of the devices.

12. The method of any one of the preceding claims, wherein the content provided to the at least one other device is different from the content delivered to the first one of the devices.

13. An arrangement for providing content to multimedia devices, the arrangement comprising:
a first system comprising:
a content portal for providing content to the devices via a communications network, the content being provided in a form requiring a rights object (RO) to enable use thereof;
a rights object portal for providing RO's to a first device; and
a messaging system arranged to associate a message with each RO being provided by said rights object portal,
whereby upon receipt of the RO with the associated message at the first device, a user is exposed to the message at the first device in conjunction with use of the content; and
a second system, comprising:
a plurality of said multimedia devices, each said multimedia device being capable of communicating with another said multimedia device via a network other than said communications network,
wherein the second system is arranged to enable the first device to communicate with the at least one other device to provide the at least one other device with the RO for the content provided thereto.

14. The arrangement of claim 13, wherein said messaging system is arranged to enable information providers to deliver messages to a database of messages managed by said messaging system.

15. The arrangement of claim 13 or claim 14 wherein said messaging system is arranged to maintain databases containing user profiles and enable information providers to determine profiles of users to which their messages are to be delivered.

16. The arrangement of any one of claim 13 to claim 15, wherein said messaging system is arranged to include a message in the RO.

17. The arrangement of any one of claim 13 to claim 16, wherein said messaging system comprises a server operated or managed by or on behalf of information providers.

18. The arrangement of any one of claim 13 to claim 17, wherein said rights object portal is arranged to generate ROs which enable the user to use the content only once such that each time the user wants to use the same content, the user is required to obtain a new RO.

19. The arrangement of any one of claim 13 to claim 17, wherein said messaging system is arranged to associate a plurality of messages each with a respective RO and deliver all of the RO's with associated messages to each device.

20. The arrangement of any one of claim 13 to claim 19, wherein the multimedia devices are portable mobile terminals.
